# EUROPEAN PATENT SPECIFICATION

(11) **EP 4 537 125 B1**
(45) Date of publication and mention of the grant of the patent: **09.12.2026**
(21) Application number: 23726139.1
(22) Date of filing: 17.05.2023
(51) Int. Cl.: G01S 5/00, G01S 5/02, G01S 5/14, G01S 11/04, G01S 19/27

(54) **SYSTEM AND METHOD FOR POSITIONING**
SYSTEM UND VERFAHREN ZUR POSITIONIERUNG
SYSTÈME ET PROCÉDÉ DE POSITIONNEMENT

(30) Priority: 10.06.2022 GB 202208506
(43) Date of publication of application: 16.04.2025
(73) Proprietor: Crowd Connected Ltd, Guildford Surrey GU2 7YG (GB)
(72) Inventor: ETHERINGTON, James, Guildford Surrey GU2 7YG (GB); COBB, James, Guildford Surrey GU2 7YG (GB)
(74) Representative: Beck Greener LLP
(86) International application number: PCT/EP2023/063290
(87) International publication number: WO 2023/237310

(56) References cited:
- WO-A1-2019/120195
- US-A1- 2010 130 229

## Description

### Technical Field

The invention relates to a system and method for positioning of a device or object. Particular embodiments relate to any range or angle-based positioning technology for mobile devices. This may be indoor positioning, using for instance mobile device sensing technologies, e.g. Bluetooth Low Energy beacons, or outdoor positioning, using for instance GNSS or eLoran.

### Background of Invention

Current and expected future wireless applications strongly rely on precise real-time positioning. A number of applications, such as smart cities, Internet of Things (IoT), medical services, automotive industry, underwater exploration, public safety, and military systems require reliable and accurate positioning techniques.

Positioning systems generally require sensors either 1) to measure the motion of the object within the environment or 2) to measure some property or properties of the environment for contextual clues to help infer position.

An example of the first technique is a revolution counter on the wheel of a vehicle giving information about the motion of the vehicle, which can be combined with directional information from a compass or magnetometer to construct a movement vector relative to a starting point from which a new position can be calculated. This is sometimes described as "dead reckoning".

Within the second technique, there are broadly two types of information about the environment that are useful for positioning. The first is geometric in nature. In simple cases, this might include finding from the sensor data ranges or angles to anchors of known position in the environment, such as Bluetooth or other RF (radio frequency) beacons. This information can be used with trilateration or triangulation methods in simple cases to calculate positions. In the complex case of GNSS positioning, such as GPS, the device obtains range information to satellites having moving positions, where the satellites' positions at any time are made available to the device such that mathematical techniques can be used on the ranges to the satellite positions to calculate the device position in the GNSS coordinate system.

The second type of information is non-geometric in nature. Instead a unique set of information that can be detected from each part of the environment is used to identify each position in the environment. Identifying a unique barcode that maps to a position in the environment, by a warehouse robot is an example. There are more sophisticated techniques, such as the technique of RF (radio frequency) fingerprinting. This technique relies on first capturing the set of radio frequency signals observed at each position within the environment to generate a lookup database that maps the signals across the environment which is then used to position a device capable of measuring the radio frequency signals. These techniques can give good results in an ideal situation. However, the construction of these lookup databases is onerous and the time to build them scales as the size of the environment increases. They are also not very robust, i.e. they are overly sensitive to configuration, and have difficulty working in changing environments and on different devices.

In both geometric and non-geometric positioning there could be any number of onboard and external sensors measuring aspects of the relative or absolute motion of the object and sensors measuring the environment. In these cases it is advantageous to combine or fuse together multiple data sources. The main advantage of this is improved location accuracy. A fused position from multiple sensors should be more accurate because it balances the strengths and weaknesses of the different sensors and the position errors from different sources should be largely uncorrelated.

Known methods for combining data from two or more sources include Kalman and particle filters. The Kalman filter is a recursive estimator of variables of a model (e.g. the physical laws describing the motion of a vehicle) from observable inputs from sensors and a system's hidden state. The state estimates from the previous time step are used together with new observations to update the model variables. Particle filters employ a Monte Carlo type approach to positioning. This technique uses a set of particles to propagate imperfect knowledge through a dynamical model. Each particle represents a weight of a particular starting position or error in input due to measurement noise. The posterior distribution obtained from the results of all the particles represents the error on the calculated model variables, such as position.

The Kalman filter has become the de facto standard method for sensor fusion problems, for example in the field of robotics, because of its computational efficiency and minimal working state. However, the vanilla Kalman filter makes several assumptions about the dynamics of the system and the measurements. Firstly the state dynamics are linear with time. Secondly, the noise in the state dynamics is normally distributed. Thirdly, the observations are a linear function of the state. For example, the number of revolutions of a wheel controlling the pulley system on a lift is a linear function of the lift elevation. Fourthly the observation noise is normally distributed.

In most real world applications some or all of these assumptions do not hold true. The dynamics of control systems are usually nonlinear and sensor response is also often nonlinear. In general, sensors can intermittently report outliers or anomalous data points skewing the noise distribution of the observations. Another complication is that it may be challenging to model all aspects of the dynamics. Any unmodeled dynamics are captured as noise which therefore might have a non-Gaussian component.

The Extended Kalman filter (EKF) was developed for nonlinear systems that can be linearised around a point using Taylor series expansions. In this version of the filter the state transitions and measurement models don't need to be linear functions of the state but should be differentiable functions. Unlike the standard Kalman filter, the EKF is not an optimal estimator, meaning that it doesn't necessarily converge to minimise the residual errors in the measurements. If the initial state of the system is wrong, or the model is not sufficiently accurate, the filter can diverge from the true state.

One example of a fusion approach for indoor positioning is given in an academic paper [6] titled: "Calibration-free positioning technique using Wi-Fi Ranging and Build-in Sensors of Mobile Devices" by Jeongsik Choi and Yang-Seok Choi, URL: https://aRXiv.orq/pdf/2003.06013.pdf. The paper describes a method for calculating the position of a moving device from fixed anchors (WiFi access points) without any initial 'fingerprint' surveys. They also simultaneously and in real-time solve for hidden state parameters including the path loss exponent, receiver sensitivity, heading offset and step length. The technique consists of three parts: (i) Initial calibration, (ii) Self-calibration of WiFi Ranging module and (iii) Kalman-Filter based positioning and calibration of the pedestrian dead reckoning module. The initial (and self-) calibration results in estimates of the hidden state parameters by iterating over a sequence of pedestrian steps and for each step looping through the set of WiFi ranges observed at the time of each step. By minimising a cost function (using gradient descent) based on the squared difference between the estimated WiFi ranges and the distance to the APs based on the estimated position at the time of the step the values for the hidden state can be estimated.

Thus, the mathematical framework to obtain the hidden state is centred on the pedestrian steps. Once the hidden state has been estimated, they employ an extended Kalman filter to calculate device positions.

The present applicants have found that a drawback of this approach is that the extended Kalman filter can give positions that rapidly diverge from reality when measurements from devices in complex real-world deployments such as exhibition venues are used.

Examples of positioning schemes based on wireless measurements and motion sensor measurements are known from US2010/130229A1 and WO2019/120195A1.

The present invention generally aims to improve positioning techniques and mitigate or avoid the shortcomings of existing schemes noted above by providing a positioning scheme that is simple to set up, accurate, and robust even in challenging environments.

### Summary of Invention

According to a first aspect of the present invention, there is provided a computer implemented method for estimating the position of a movable device in an environment, the method comprising:
receiving a first set of observations taken at various times between the movable device and plural distributed anchors, wherein the anchors have known positions in the environment and the observations are taken by a first set of one or more of sensors;
defining a time window for a required time for which the position of the movable device is to be estimated;
for each observation taken at a time point within the time window:
   estimating the range and/or angle from the movable device to the anchor from the observation;
   estimating the displacement of the movable device due to its motion between the time the observation was taken and the required time, wherein the displacement is estimated based at least in part on receiving observations taken by a second set of one or more sensors; and characterized by
   adjusting the position of the anchor involved in the observation by the displacement so as to compensate for the effect of the motion of the movable device; and
calculating the position of the movable device at the required time based on the ranges and/or angles and the adjusted anchor positions.

The invention provides a novel way of fusing range and displacement measurements within a time window to estimate the position of a moving object at a required time.

NB "positioning" used herein is intended to cover any scheme for determining the position of a movable device or object in an environment, including a movable device itself determining its position in an environment as well as "localisation" techniques which is a term sometimes used in academic papers to relate to a positioning scheme where a system of sensors locates an object within the sensor field. The movable device can be an electronic device for example comprising some or all of the sensors and/or performing some or all of the calculation, or can be passive, such that the sensors and/or calculation is performed externally to the device.

The method estimates a position from observations with times inside a defined time window. The window could be the 30 second duration (or any other duration) prior to the time of the required position estimate. This might be chosen when the position is to be calculated in real time or near real time. Or if the positioning is carried out retrospectively, the window might be centered on the time of the required position estimate. The window will usually contain the time of the required position estimate, but this doesn't have to be the case. In principle, any offsets may be used, but it is preferred in most cases that the window is close to the time when the position estimate is required.

The importance of employing a time window to estimate position can be seen from the simpler case of a stationary device. Calculating the position of a stationary device from ranges to the anchor positions, e.g. RF or other wireless beacons, using only the most recent ranges can give a poor position because the measurement noise results in over and/or underestimates of the ranges. However, if measurements over a larger window of time are used, the position is likely to be more accurate because the measurement noise can be overcome by having more measurements.

In the case of a moving device and using ranges/angles to anchor positions alone, it is not possible to extend the time window because the position of the object is changing during the time window.

The key innovation in this method is to exploit an extended window of data to calculate a position at a required time for a moving device by using the stored displacement data from a second set of sensors, e.g. onboard inertial, accelerometer and gyroscope sensors. The extended window of data enables more accurate positioning for the same reason as described for the case of a stationary device. In effect, by adjusting the anchor positions to compensate for the displacement of the device since the observations to those anchors were made, all of the observations are shifted to a single point of reference, i.e. the time when the position is to be estimated.

In other words, instead of taking anchor observations from a short time window, during which it can be assumed the device is stationary, the method takes observations over a longer time window, and corrects for device motion by sensing displacement, e.g. using inertial sensors.

The calculation of position can then use these estimated ranges/angles interchangeably in the calculation, i.e. the temporal relevance of each reading is removed, so for instance they can be processed in any order. Simple trilateration or triangulation techniques can be used with the ranges/angles and the adjusted anchor positions to estimate the device position. The range/angle observations are inherently likely to contain some degree of error due to noise, etc, such that no position estimate will fit all the data perfectly and there will be some residual error in the calculation. Thus, Multidimensional Scaling (MDS) may be used as a suitable technique for estimating position which deals with this residual error. Weighted MDS is particularly preferred in the examples given herein.

The ranges and/or angles are indicative of the position of the anchor relative to the device. These can be expressed in any coordinate system, e.g. polar, cartesian, etc, and which alone or in combination allow the position of the device to be estimated relative to the anchors and thus, via knowledge of the absolute position of the anchors in the desired frame of reference, in absolute terms. When observation values are translated into range values these are preferably in the coordinate space as the anchor positions, e.g. both expressed in meters, which may make the calculations of estimating the device's position simpler or more accurate. Models, such as path loss models for signal strength observations, or scaling factors may be applied to move from observations to ranges. In other examples, the observations may be sufficiently correlated with ranges that the calculations in estimating position can work directly on observations as ranges. For instance, wMDS techniques could in principle use signal strength values as range values in finding position.

Since the position of the anchors is known, once the position of the mobile device is known relative to the anchors, it can be mapped to the absolute position in the environment. The method may then be repeated for different time points, e.g. using a sliding window of data.

The anchors may have a fixed position such that their positions may be made known to the present method in an initial configuration step, or, such as in the case of GNSS, the anchors may be moving and their position calculated independently of the present method and made available to the present method at the relevant times when observations are made. In any case, the positions of the anchors are known at the times the observations are taken and used by the algorithm in estimating position.

One anchor may be counted twice in the same position calculation (i.e. observations to the same anchor taken at different times and shifted to the same time frame). It is equally possible that some anchors are counted only once, as they go into/out of range as the device moves.

By using a time window of data this method can exploit a large number of measurements to calculate a single position. This gives accurate and robust position estimates even with noisy measurements. This is found to be simpler and more robust than alternative sensor fusion approaches using Kalman filters, whilst avoiding the calibration overheads associated with alternative "fingerprinting" techniques.

By using a longer time window, more observations are obtained of each anchor, as they usually transmit at a fixed frequency. There can be both random and systematic noise in the observations. Using more observations reduces the effect of random noise. This may also increase the number of distinct anchors seen, if the transmit frequency is low compared to the window. There could potentially be time varying errors. So taking observations at different times improves the temporal diversity of measurement, which would mitigate these errors.

By using observations from different locations, the method increases the distinct number of anchors seen, as they may be visible from some locations and not others. It also gains spatial diversity - there can be 'fast-fading' effects. For example with WiFi RTT (round trip time) the observed range error can go up and down every 50 cm or so, related to the wavelength of the signal. By taking observations from different distances, these effects can be mitigated. Or for example, received signal strength indicator (RSSI) measurements can be affected by shadowing causing spatially correlated error, which can be mitigated with spatial diversity.

In addition to estimating positions this method can be employed to simultaneously calculate other unknown variables associated with the dynamics of the system or parameters associated with the sensors or environment. These variables which are typically required for position calculations would otherwise have to be found by other means, for example via calibration. In effect lots of different values of the parameters are tried and the positioning algorithm (e.g. MDS) is run for each to see which ones minimise some measure of error or stress in the positioning algorithm. This makes the system 'adaptive'. In practice most of these parameters change over time.

This technique is range-based so enables the positioning of moving objects, such as mobile devices without the need to survey the environment and create so-called 'fingerprints'. This is advantageous because these surveys are time consuming, can be device specific and become out-of-date if the environment changes. This invention makes it possible to build a positioning system that is truly self-service.

The techniques described using ranges can be extended to angle of arrival and angle of departure positioning.

The techniques described are applicable to any positioning that uses ranges or angles to anchors having known positions. The range may be estimated from time of flight (eg WiFi 802.11mc), Phase measurements (eg Dialog's proprietary WiRa extension to the Bluetooth specification), or signal strength (eg RSSI measurements of Bluetooth Low Energy). In principle, any ranging or angle techniques can be used. The techniques may also be extended to outdoor positioning, e.g. using GNSS or eLoran.

In one embodiment the transmitters are Bluetooth beacons and the movable devices contain Bluetooth chips that can scan for Bluetooth signals. The movable devices contain accelerometers and gyroscopes to sense displacements of the device. This is therefore useful with modern smartphones, tablets and other mobile computing devices which commonly come equipped with suitable sensors.

In other embodiments any technique can be used to determine the range from movable device to anchor, including other RF signals, such as WiFi 802.11mc, 801.11az, and other signals or waveforms capable of propagating in the environment between device and anchor, such as Ultrasound, radar, sonar, laser light, Ultra wideband (UWB) etc. the properties of which can be measured to indicate range. There is nothing to prevent anchors of different types, using different range determination techniques, being used simultaneously.

In other embodiments the angle between mobile device and anchor is sensed, for example using Bluetooth Angle of Arrival or Departure.

In other embodiments the movable device can transmit signals, and the anchors can receive them. The observations from those anchors can be used to estimate range and/or angle, e.g. by sending them to a server or other device which receives all of the observations.

In other embodiments the displacement of the device can be sensed in other ways, using sensors on the device, or elsewhere.

In embodiments, the position may be evaluated periodically, for instance between 0.5s and 5s periodicity.

In an embodiment the adjusted positions are calculated using geometric techniques. For example, the displacement may be resolved into x and y components and added to the x and y coordinates of the anchor positions. This is typically computationally inexpensive.

In an embodiment, a multidimensional scaling algorithm is used to calculate position. Preferably the first and second set of sensors are different. The first set of sensors may detect the strength, time of flight, phase, angle or arrival or departure of a wireless signal transmitted by the anchors and detected by the device and/or transmitted by the device and detected by the anchors. The wireless signal may be an electromagnetic signal, including a RF signal (e.g. radio wave or microwave), such as for example Bluetooth, radar, or light beam (e.g. laser positioning), including visible light, ultraviolet or infra-red signals; or sound waves such as ultrasound, sonar, etc. The second sensors may include sensors on the device for detecting motion of the device within the environment. For instance these may include inertial sensors, such as accelerometer, gyroscopes and/or magnetometers, and/or other sensors that allow for measurement of distance travelled by the device in a direction of the device (i.e. heading), sometimes referred to a "dead reckoning" positioning calculation. Depending on the application, this might be based on detecting pedestrian steps based on inertial measurements, or vehicle or robot positioning using measurements of the rotation of the wheels/tracks/drivetrain in addition to or as an alternative to inertial measurements to estimate displacements. Thus, different types of sensors are fused in a way that plays to the strengths and capabilities of each type of sensor.

In an embodiment, the position is calculated using trilateration or triangulation, using 3 or more measurements.

In an embodiment, in the method, at least one of:
i) the estimation of the range and/or angle
ii) the estimation of the displacement of the movable device and
iii) estimating the position of the movable device from observations is based on a model having at least one hidden state parameter.

In an embodiment, the method comprises estimating the hidden state parameter using an optimisation technique that minimises the difference between the expected and observed values of the ranges to the anchors or between the expected and actual observations. Typically this would be an iterative process of adjusting a parameter and seeing what effect it has on the outcome, until a desired level of convergence or acceptable value for the difference is reached.

Thus, in addition to estimating positions as described in claim 1, the method can be used to estimate hidden state associated with the mechanisms of the sensors and of the dynamics of the system. More accurate estimates of the hidden state enables more accurate device positions to be calculated.

In one embodiment of an IPS that consists of Bluetooth beacons at fixed locations and movable devices containing sensors there are a number of hidden state variables. The Bluetooth chip on the mobile phone reports received signal strength (RSSI) values from the observed beacons. These signal strengths must be converted into estimated ranges. This can be achieved using a standard attenuation model: $range = {10}^{\frac{TX + RX - RSSI}{10 ∗ ρ}}$ Eq1 where ρ is the path loss exponent, TX is the transmit power of the Bluetooth beacons and RX is the receiver sensitivity. In general at least some of the parameters of this model are unknown. The path loss exponent and receiver sensitivity are typically unknown and vary upon the environment, across devices and over time. The beacon transmit power is usually specified by the manufacturer, but even this parameter can change over time, for example as the batteries powering the beacons discharge.

Onboard accelerometers measure the forces on the device in each of 3 orthogonal directions and the gyroscope measures the relative orientation of the device. In theory it should be possible to obtain accurate position displacements solely from these sensor measurements. However the mass produced chips in modern smartphones are not very accurate and errors in the measurements compound over time meaning they are often not well suited for this task.

A more fruitful approach is to detect steps from the accelerometer data and combine each step with a heading. Steps are relatively simple to detect from the repeating pattern of accelerations generated from a person's gait. The displacement data can therefore be conveniently parameterised as a heading and a step. However even with this parameterisation there are at least two reasons why this data is imperfect.

Firstly, mobile compasses are inaccurate in indoor settings. The heading reported from other sensors (eg gyroscope) is relative to an arbitrary and unknown axis and this axis can drift over time or even reset.

Secondly, although there are well known methods to identify steps from the pattern of accelerations these typically yield inaccurate estimates of the step length.

The heading offset between the heading measurements and an absolute axis defined by a map or site plan, and the step length can therefore be considered as hidden state of the system. These hidden state variables can be fused with the relative heading data from the gyroscope and step detection data from the accelerometer to plot the displacement of the device through the environment.

In one possible embodiment there are four hidden variables that can vary spatially and over time: path loss exponent, receiver (RX) sensitivity, heading offset and step length. In this embodiment it is assumed that the transmitter (TX) power of the beacons is known, because it is specified by the manufacturer.

In other embodiments, the parameters required to calculate a range from an observation or displacement from sensor readings may not represent anything physical - they are in general just parameters required in a transform from observation to range or displacement.

Parameterising the hidden variables using models enables the expected values of observables such as the RSSIs from the beacon signals or their corresponding ranges to be calculated and this provides a method of evaluating the hidden state.

For example modifying the step length changes the beacon translations calculated as described in claim 1. This leads to a different estimated device position and hence the expected ranges to the beacons also changes. By minimising the difference between the expected RSSIs/ranges and the observed RSSIs/ranges as the step length is varied the optimal value for the step length can be found. In practice this can be done by a numerical optimiser such as the Broyden-Fletcher-Goldfarb-Shanno (BFGS) algorithm or a gradient descent algorithm.

Once the hidden state has been evaluated the method as described in claim 1 can be used to calculate a final position at a required time.

It will be appreciated that different models with different hidden parameters may be used, and this is largely dependent on the types of sensor used and other implementation details.

In an embodiment, the optimisation comprises:
i) finding a provisional estimated position of the device using the current hidden state parameters according to the method of claim 1;
ii) comparing the provisional estimated position of the movable device with the adjusted beacon positions to obtain expected range values or observation values;
iii) calculating the combined difference and determining whether a convergence criteria is met; and,
iv) if the criteria is not met, adjusting at least one hidden parameter and repeating steps i) to iii) until the criteria is met, and if the criteria is met, taking the adjusted parameter values as the new parameter values to be used in future parameter and/or position estimations.

Generally the optimisation will operate over multiple observations in the window, and needs to minimise on some average (e.g. RMSE) of individual differences based on the expected values using the provisional estimate of position and the observed values (this can be in either sensor space, i.e. RSSI values, or position space, e.g. ranges). For instance, mean squared error or a similar known error function can be used.

In an embodiment, the hidden state parameters used to estimate displacement of the movable device includes one or more of: step length, starting position or starting heading, heading offset and offset drift. Any of these can be useful parameters in modeling how to translate sensor readings to physical displacement. In the detailed examples given, step length and heading offset are the primary examples given in a pedestrian dead reckoning system. Starting position or starting heading and offset drift may be used in more complicated models to refine the accuracy. Other parameters are possible, depending on the physical system and model chosen to represent it.

In a further embodiment, the hidden state parameters used to determine the range to the observed anchors includes one or more of: TX power, path loss and RX sensitivity.

In an embodiment, the time window used to estimate positions and hidden state is tuned or dynamically adjusted in duration or offset. The duration of the time window used to estimate positions and hidden state can be modified or tuned depending upon the application. In some applications it could be beneficial to dynamically change the duration of the time window depending upon a property of the system or one more external factors.

For instance, in the Indoor Positioning System (IPS) example described herein, increasing the size of the time window increases the number of Bluetooth observations that can be used but it also potentially increases the displacements that are applied to the beacons, depending upon how far the device has moved within the window.

In the limit where the device remains stationary the time window can be made relatively large (30 seconds - 2 minutes) and all of the Bluetooth observations in this window can be employed to calculate a position. The other limit is when somebody is walking with the device at pace or running. For accurate results in this limit a smaller time window can be preferred (5 - 10 seconds). This is because small errors in the hidden state (specifically the heading offset) can lead to large errors in the beacon displacements. These errors are more severe for those observations in the window that have the largest time offset from the required time. Large time windows can also give 'over smoothed' or 'laggy' results. It is assumed that the values of the hidden state parameters do not change within the time window. As the duration of the time window increases this assumption becomes problematic. Conversely, time windows that are too small (1 - 2 seconds) give results that are too 'noisy' or 'jumpy'. There is a sweet spot for the duration of the time window that enables a sizable number of Bluetooth observations to be used to effectively determine the hidden state and produce highly accurate positions.

In some embodiments, the window size may be dynamically altered depending on a determined state of the device, e.g. at rest, moving relatively slowly, moving relatively fast, etc. as determined, for example, from the accelerometer or other data.

In an embodiment hidden state parameters are estimated independently from position calculations with a different duration time window.

In the IPS embodiment described previously the variables: positions, path loss exponent, heading offset etc were evaluated using a common time window. This does not need to be the case. In fact, it is possible to obtain better results using different duration time windows for each variable. It can be beneficial to employ a longer time window when estimating hidden state and shorter time window for evaluating positions. The window duration can be different for each hidden variable. A relatively large time window could be used for evaluating step length to ensure that a series of complete steps are captured within the window.

In an embodiment, different hidden state parameters are estimated independently from each other and independently from position calculations using their own tuned or dynamically adjusted time windows.

Positioning is most sensitive to the heading offset so it is advantageous to evaluate this parameter the most frequently (~ every 2 seconds if there are regular steps). Changes in the orientation of the device impact the heading offset so it is important that it is regularly reevaluated.

The path loss exponent typically varies relatively slowly in most indoor settings. The path loss exponent can change dramatically however if, for example, the device is placed within a bag. Nevertheless, in general, positioning is less sensitive to the path loss exponent compared to changes in heading offset. A longer evaluation interval is therefore suitable for the path loss exponent. (~every 4 seconds, regardless of if there were steps).

The step length is an important input to calculate the beacon translations but less so compared with the heading offset. This parameter can therefore be updated with an interval that is in between the interval for the heading offset and the path loss exponent (~every 3 seconds if there are regular steps).

The position and hidden state evaluations do not need to be updated on a regular interval. Instead, evaluations could be triggered dynamically based on one or more criteria for each variable. For instance, a certain number of new observations being available or a certain number of new steps being detected.

In an aspect, the invention extends to a computer program for carrying out the method described above.

In another aspect, the invention extends to a movable device comprising a processing device, memory, a first set of sensors and a second set of sensors, arranged to carry out the method described above.

In another aspect, the invention extends to a system comprising a movable device, plural anchors, a processing device arranged to carry out the method described above.

### Brief description of drawings

Embodiments of the present invention will now be described by way of example with reference to the accompanying drawings, in which:
Figures 1 to 3 show examples of positioning systems for estimating the position of a mobile device in an environment according to embodiments of the invention;
Figure 4 shows an example of the movement of a mobile device within the environment and adjustments made to beacon positions at each time period according to embodiments of the invention;
Figures 5a to 5e show in more detail the adjustment of a beacon position;
Figure 6 shows an example of a flow diagram of the steps taken to position the mobile device according to an embodiment of the invention;
Figure 7 shows an example of a flow diagram of the steps taken to estimate the hidden variables of the system model according to an embodiment of the invention; and
Figure 8 shows an example of optimising a hidden variable which can be used with the flow of Figure 7.

### Detailed Description

### System Diagram

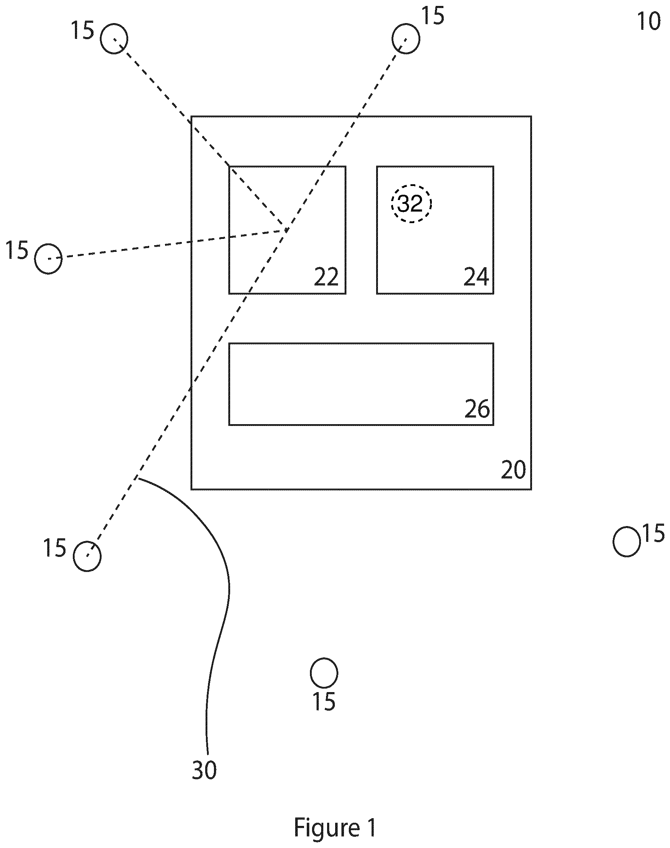

Figures 1 to 3 show examples of a positioning system according to embodiments of the present invention. In general, the systems 10 comprises a number of basic elements (with like reference numerals showing like elements) including the moving object 20 that is to be positioned, anchor points 15 with known positions in the environment and a number of sensors or measurement capabilities 22,24.

Over time, estimates of the distance between the moving object 20 and the anchor points 15 are obtained together with the times of the observations 30. Many techniques for obtaining these measurements may potentially be used with the invention. For example a signal could be emitted from the anchor points and detected on board the moving object or vice versa or sensors external to both the anchor points and the moving object could be used to estimate the ranges.

In addition to the ranges to the anchor points, the method requires observations 32 of the moving object's displacements over time. Again different ways of obtaining these measurements may be used. For example, sensors on board the object could be responsible for collecting these observations. Generally the sensor(s) used for estimating displacements of the device are different from those used for estimating distance between the moving object and the anchor points and these readings are both used, i.e. "fused", in estimating. Often a combination of sensor observations to anchor points in the environment and onboard sensor observations of the device's movement will be preferred.

Estimating position can take place by software 34 anywhere where the ranges or sensor observations and displacement information are brought together, e.g. over an appropriate communication network. This can be software 34 on the device or software 34 external to the device (e.g. a local or remote server).

Figure 1 shows a specific example in which a number of anchors 15 that emit signals that can be detected with sensors 22 on board the moving object 20 providing a sequence of observations 30. The device 20 also contains sensors 24 that detect displacements of the device providing further observations. The device has memory and processing units 26 running software 34 that are used to process the observations and compute positions.

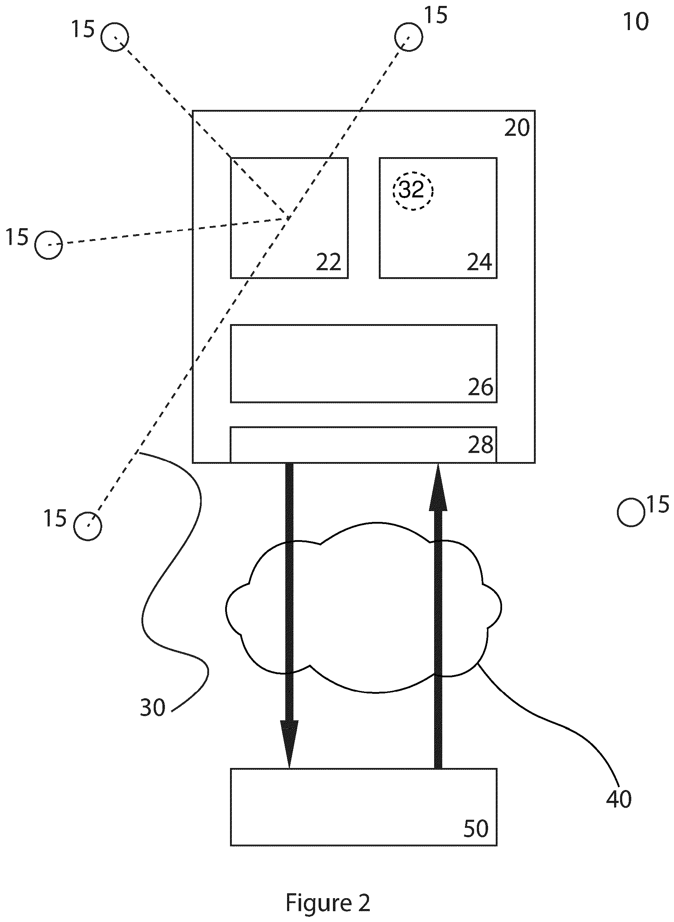

Figure 2 shows a variation of the system 10 shown in Figure 1. In this example there is an external server 50, in the cloud in this example, and two-way communication is provided between the server 50 and the device 20 via a communications interface 28 of the device and a network 40. In this example observations 30,32 can be transmitted to the server and the device positions can be calculated externally from the device 20 by software 34 running on the server 50.

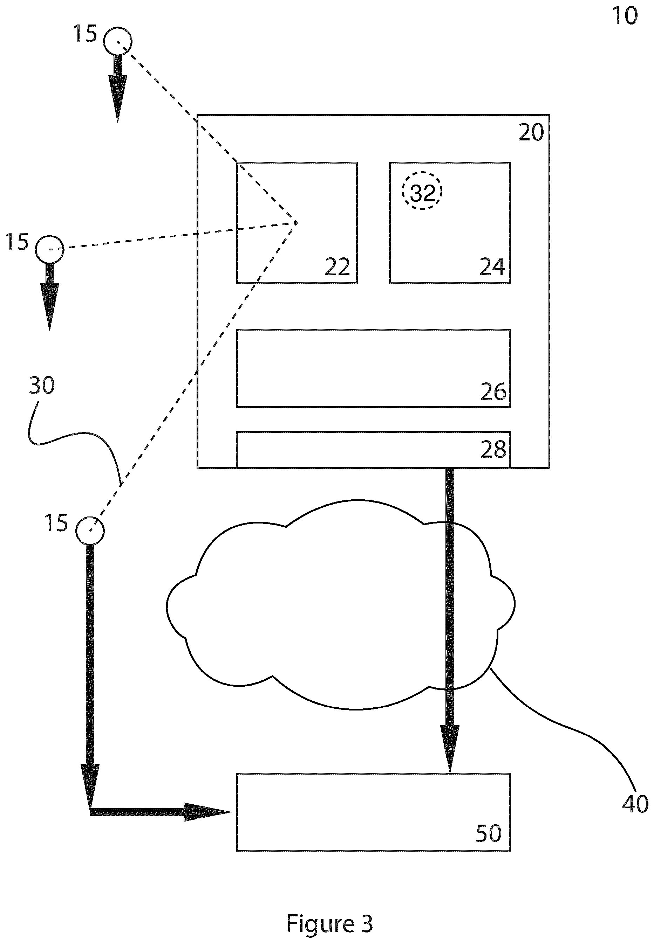

Figure 3 shows another variation. In this case the moving device 20 emits signals that are detected at the anchors 15 which then send the observations 30 to a server 50 over a network 40. Separate sensors 24 onboard the device 20 measure relative displacements 32 and these observations 32 are sent to the server 50 from software 34 running on the device 20 over the network 40. Positions can then be calculated by software 34 running on the server 50.

### Observation Alignment

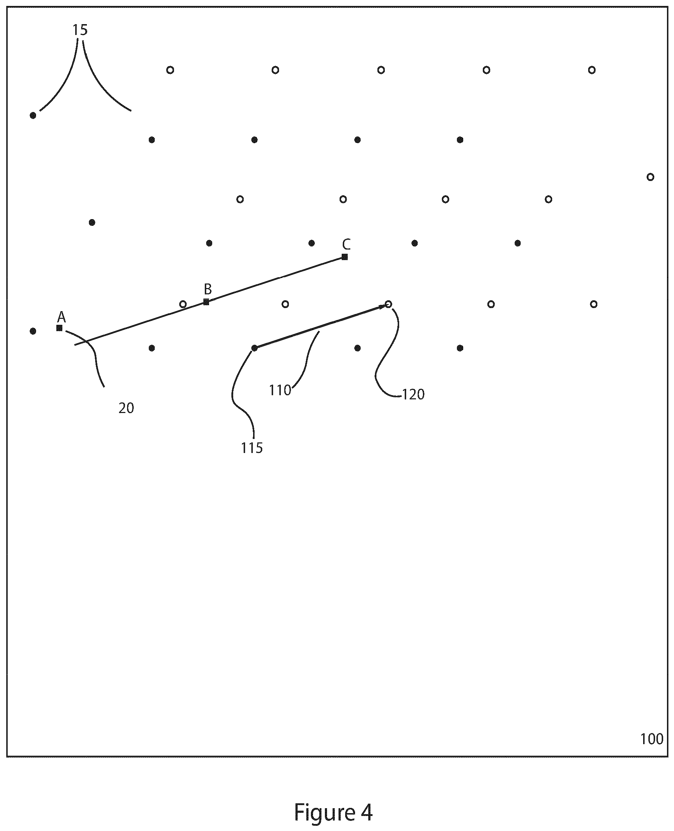

A particular technique used herein stacks observations taken at different times at a required time so they are aligned in time and thus position to compensate for motion of the device and then these stacked observations are used in calculating the position of the device. A simple example is illustrated by Figure 4. The IPS system consists of two main elements: the mobile device and the transmitters 15 installed at known locations around the environment (shown by dots). In this example, the transmitters are Bluetooth beacons and the mobile devices contain Bluetooth chips that can scan for Bluetooth signals. The device also contains an inertial measurement unit (IMU) that measures and reports the device's specific force, angular rate, and sometimes the orientation of the body, using a combination of accelerometers, gyroscopes, and sometimes magnetometers from which displacements of the device may be calculated, i.e. distances moved and heading. However as will be appreciated, many different sensor schemes may be used to obtain these observations.

The device continuously scans for observations from the transmitters 15 in the environment. Generally the device operating system will determine when observations are taken and made available to the software. The device stores the Bluetooth signal strength (RSSI) observations together with the observation times. These observations are converted into estimated ranges for example using a standard attenuation formula (EQ1).

Accelerometer and gyroscope observations are processed and stored as position displacements (e.g. in direction and magnitude) together with observations times.

The mobile device 20 moves between different positions at time points A, B and C within the environment. When the device 20 is at time point B it records a first set of Bluetooth observations from the beacons. When the device is at time point C it records a second set of Bluetooth observations from those beacons.

Next, the Bluetooth observations captured at time point B are mapped to time point C's frame of reference by estimating the device's displacement between the observations recorded at time point B and at time point C and then translating 110 the beacon positions according to this displacement so the observations recorded at B from the (real) beacon (real) positions (shown by dots, e.g. beacon 115) are equivalent to observations at C of the (virtual) beacon positions (shown by circles, e.g. beacon 120).

Once these translations have been applied, standard trilateration or triangulation methods are used to estimate the device position with the key benefit of exploiting a larger number of range measurements. For instance, an MDS algorithm [7] may be used, although other algorithms are possible. Triangulation is generally used when bearing information is obtained, i.e. the relative angle between some axis of the device and the beacons, whereas trilateration is used when distance information is obtained, i.e. the relative distance between the device and beacon or some proxy thereof. NB "tri-" in these terms should not be taken as implying only three observations are used in the calculation, but rather that any number of three or more observations is used.

This technique makes it possible to transform Bluetooth observations captured within a window of time to a single moment in time (in this case at C) and thus to a single device position), i.e. stacking and aligning the observations at that time. This provides a means of essentially compensating for motion and removing time from the problem, thus simplifying the calculation of position relative to prior art techniques [5,6]

It will be appreciated that this is a simple example to explain the principles of the technique in which observations from a single time (B) are mapped to another time (C). In practice, sensor readings from many times may be mapped to a particular time at which it is required to obtain an estimate of position.

An advantage of stacking the observations in this way compared with alternative fusion techniques is that it enables many more Bluetooth observations to be used to calculate the hidden state and position of a device for a particular moment in time. So, for instance, if observations from 3 different beacons at 3 different times are mapped to the same time point at which it is required to estimate the device's position, this gives 9 observations to 9 "virtual" beacons with displaced positions which are used in the calculation of position. Each of the 9 observations can be treated identically by the calculation to estimate position as their relative timing has been eliminated as a factor. Using more observations helps overcome the noise associated with Bluetooth observations. For instance, the observation of a particular beacon may be used from different device positions, such that, for instance, fading effects or other distortions that have affected one observation of that beacon do not affect different observations of that beacon because for example the device has moved from behind an obstruction in the meantime. Thus, the effect of any one observation and noise in that observation is reduced in the calculation of position.

### Obtaining displacement and range/angle data from sensor readings

In the example given in Figure 4, Bluetooth RSSI readings were used to determine the relative distance from the mobile device to the beacons. It will be appreciated that many techniques can be used to determine the range from mobile device to anchor, including WiFi 802.11mc, 801.11az, Ultrasound etc. It is possible to use anchors of different types, using different range determination techniques, simultaneously. Equally in other examples the angle between mobile device and anchor is sensed, for example using Bluetooth Angle of Arrival or Departure. In other examples the mobile device can transmit signals, and the anchors can receive them. Similarly many types of sensors could be used to obtain the device displacement data.

It will be appreciated that various processing may be required to transform the sensor readings into appropriate ranges. This will largely depend on the types of sensor used, whether they are positioned on the moving device, the anchors or elsewhere, and how accurate those sensors are in the particular environment. For instance, in the example of Figure 4, a standard attenuation formula (Eq1) is used to transform RSSI measurements from the beacons to distances. In time of flight measurements, different models may be used.

Similarly, various processing may be required to transform the internal sensor readings into displacement data when performing "dead reckoning" to determine the displacement of the device. For instance, the device may have a compass or gyroscope that gives readings of orientation and measures wheel rotation to give an indication of distance travelled which can be combined to give a displacement vector for the device.

In some instances, the sensor data may give accurate displacement and range/angle information. In other examples, the sensor data may need to be combined with various parameters of the physical system which allow the sensor data to be transformed into a suitable frame of reference, i.e. transforming RSSIs into distances and transforming gyroscope and wheel rotation data into displacements with the same units.

This requires an initial and/or ongoing estimate of one or more parameters to transform the sensor readings into accurate displacement and range/angle data. For example, in using a standard attenuation formula (Eq1), a measure of the path loss, transmitter strength and receiver sensitivity is required. When monitoring wheel rotation, the circumference of the wheel would be needed to translate rotation into distance for the displacement calculation. In some examples, this could be a simple default value, e.g. based on the a priori knowledge of the sensor types or environment or other system parameters, or by using an initial calibration step. This may work with relatively static values, but in other examples, ongoing dynamic estimates of the parameter are needed to give accurate results. For example, as discussed above, when using various models for pedestrian dead reckoning to calculate device displacements, an accurate value for step length and heading offset is required, and these hidden parameters are likely to dynamically change. To deal with this case, an example is given below of stacking observations taken at different times to compensate for device movement (in a similar way as described above in relation to finding position) to estimate hidden parameters of the model used to convert sensor observations into displacement data.

In angle of arrival/depart schemes, the distance from the beacons is not required and so there is no need to convert RSSI observations to distance information, as in the previous example. Where the mobile device is measuring angle, it may be necessary instead to track the orientation of the device relative to the coordinate system of the beacons to account for any rotation of the device between observations. This is not necessary where the fixed beacons are detecting the angle or arrival/departure of the mobile device's signal.

### Position Estimation Process

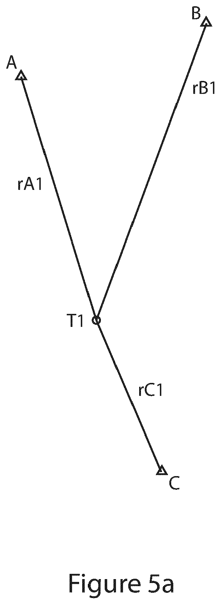

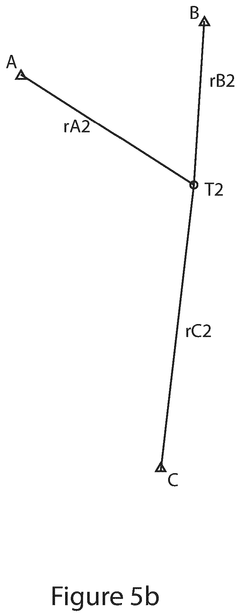

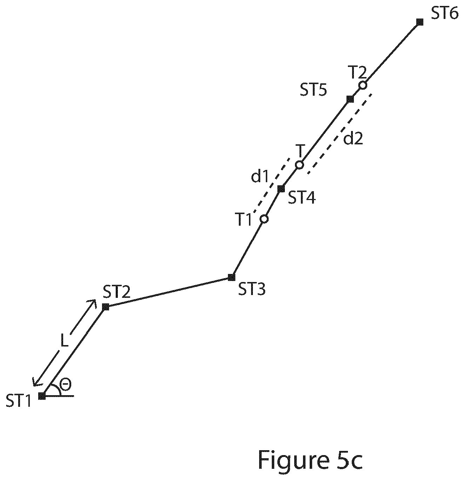

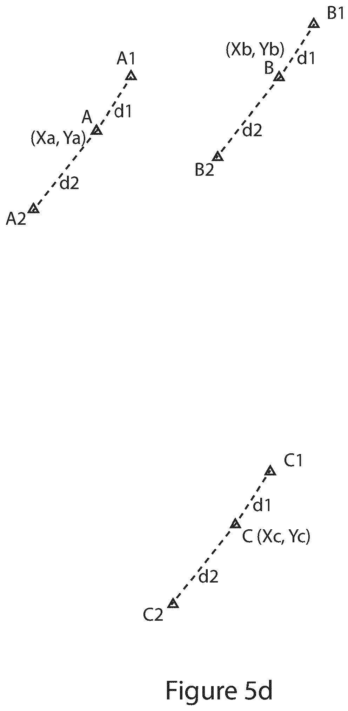

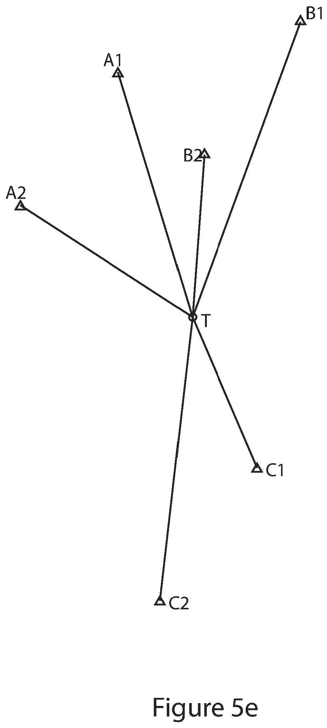

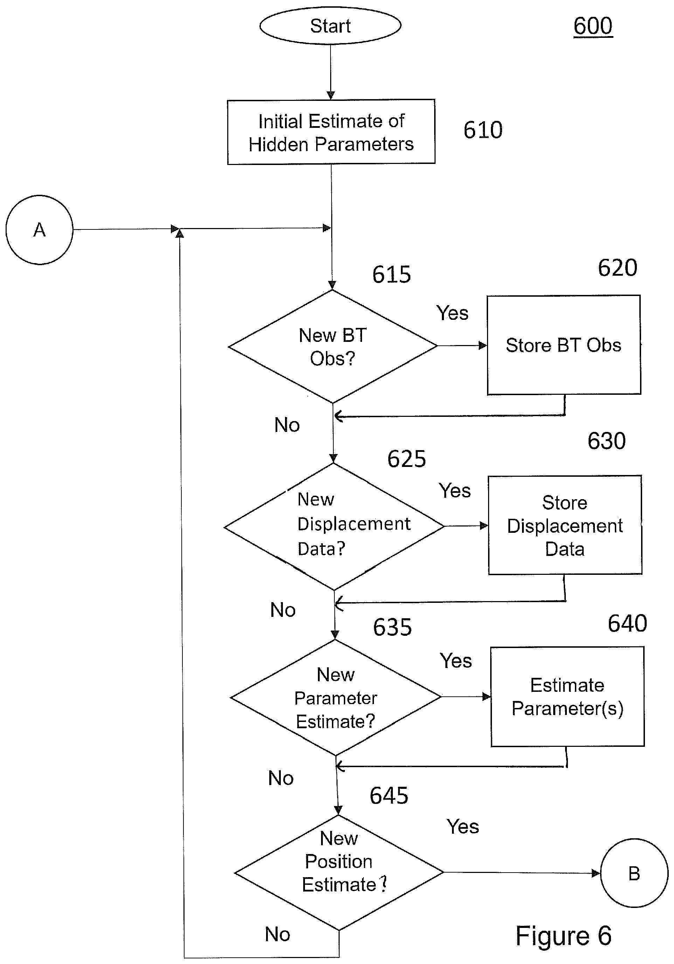

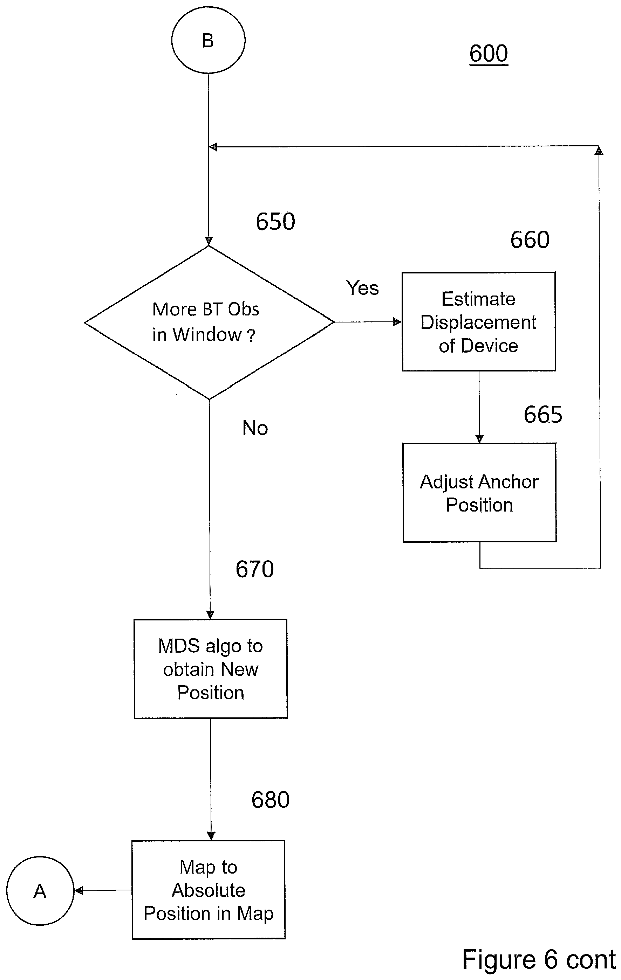

Figures 5 and 6 show a detailed example of using this observation stacking technique in an indoor positioning system (IPS) to estimate the position of a mobile device. As in the example of Figure 4, the IPS system comprises Bluetooth beacons at fixed positions around the environment and the mobile devices contain Bluetooth chips that can scan for Bluetooth signals. The device also contains accelerometers and gyroscopes to sense displacements of the device.

A model is used of this system that has a number of hidden state variables. The Bluetooth chip on the mobile phone reports received signal strength (RSSI) values from the observed beacons. These signal strengths must be converted into estimated ranges. This can be achieved using a standard attenuation model: $range = {10}^{\frac{TX + RX - RSSI}{10 ∗ ρ}}$ EQ1 where ρ is the path loss exponent, TX is the transmit power of the beacons and RX is the receiver sensitivity. In general at least some of the parameters of this model are unknown. The path loss exponent and receiver sensitivity are typically unknown and vary upon the environment, across phones and over time. The beacon transmit power is usually specified by the manufacturer, but even this parameter can change over time, for example as the batteries powering the beacons discharge.

Onboard accelerometers measure the forces on the device in each of 3 orthogonal directions and the gyroscope measures the relative orientation of the device. In theory it should be possible to obtain accurate position displacements solely from these sensor measurements. Various "pedestrian dead reckoning" (PDR) techniques have been attempted in the prior art. However the mass produced chips in modern smartphones are not sufficiently accurate and errors in the measurements compound over time.

The approach used in this example is to detect steps from the accelerometer data, which are relatively simple to detect from the repeating pattern of accelerations generated from a person's gait, and fuse these with the step length and the absolute heading derived from the relative heading measurements from the gyroscope and the heading offset between the heading measurements and an absolute axis defined by a map or site plan. The step length and heading offset can therefore be considered as hidden state of the system.

Thus, in this example, there are four hidden variables that can vary spatially and over time: path loss exponent, RX sensitivity, heading offset and step length. In this example we assume that the TX power of the beacons is known, because it is specified by the manufacturer.

Other models and parameters are possible. Indeed, the parameters required to calculate range from an observation may not represent anything physical - they are in general just parameters required in a transform from observation to range.

Parameterising the hidden variables using models enables the expected values of observables such as the RSSIs from the beacon signals or their corresponding ranges to be calculated and this provides a method of evaluating the hidden state.

In the present example, the inputs are the Bluetooth observations and the step data. The hidden state is estimated and lastly the device position is calculated.

### Inputs:

- Bluetooth Observations
- Steps

### Hidden State:

- Heading offset
- Step length
- Path Loss Exponent
- RX sensitivity

### Outputs:

- Position (XY)

The method 600 starts at block 610 in which initial values for the hidden state parameters are determined. These might be simple default values, or otherwise obtained in any way. In one example, only Bluetooth RSSI observations are used initially to establish estimates of device position, which can then be fed into the model to establish initial estimates for the hidden state variables. As discussed below, these estimates are preferably refined as the process continues.

Bluetooth observations comprising RSSI values and step observations comprising step events and relative heading and their timestamps are added to in-memory data structures as they are reported at blocks 615,620 and 625,630 respectively. These data structures can be easily queried and windows of data can be extracted between a start and end time. Figures 5a to 5e show a sequence of Bluetooth observations and step observations as a device moves through the environment and the transformations performed to align the Bluetooth observations at a time T. Figure 5c shows a number of steps ST1-ST6 data points each comprising a time (from the accelerometer data detecting a new step) and heading (from the gyroscope data). Figure 5a show Bluetooth observations rA1, rB1, rC1 made at time T1 to the beacons A, B and C, and Figure 5b shows further observations to those beacons at time T2. Each beacon has a known position in the environment - respectively (Xa,Ya), (Xb,Yb), (Xc,Yc).

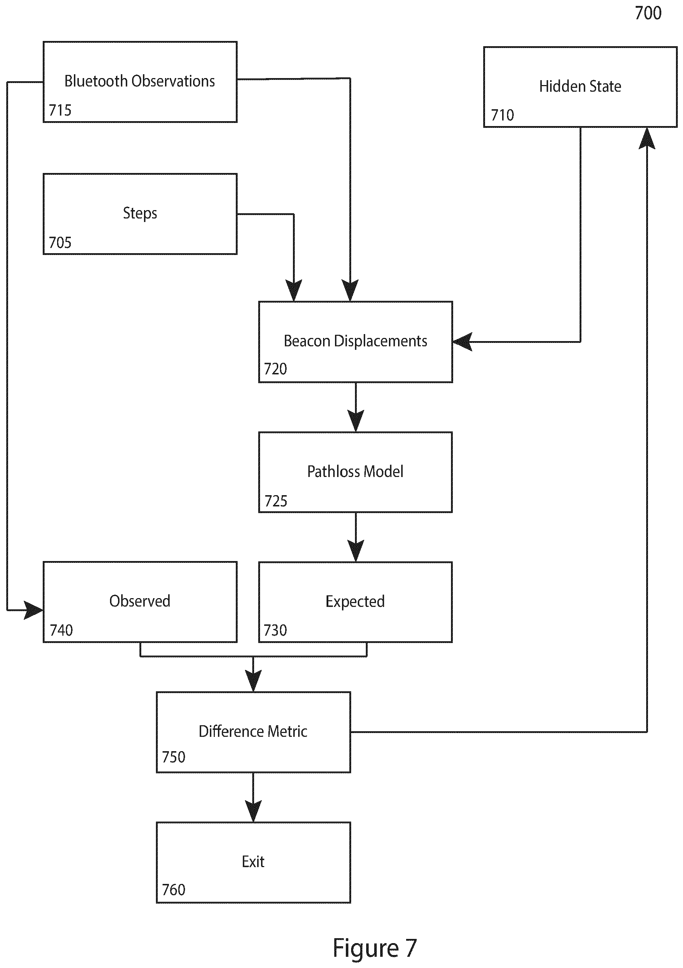

At block 635, on a regular time interval or otherwise one or more triggers fire to evaluate the hidden state values from the inputs. Various techniques could be used to do this. A preferred technique is described below in relation to Figure 7 using the "observation alignment" technique disclosed herein.

At block 645, it is determined that a new device position should be calculated for a time T. A time window is defined relative to the time T. In this case, the time window is 15 seconds prior to T and 15 seconds after T. The memory structures are queried to obtain the relevant RSSI observations and step data for this period. Steps ST2 to ST5 and Bluetooth observations at T1 and T2 are determined to be within this time window.

First, at block 650, for each RSSI observation in turn, the displacement of the device (d1,d2) between the observation being taken (at times T1, T2) and the required time T of the position is calculated (block 660) using the step data and the current values for the hidden parameters of step length and heading offset. Interpolation is used where necessary, as in general the observation times of the Bluetooth signals (T1,T2) will not align with the times of the position displacements (ST1-ST6). It is not necessary to know the absolute position of the device to calculate these displacements, just the relative vector between two times (T and T1; T and T2, etc). This displacement is then applied to the Bluetooth beacon position (at block 665) to obtain the position of a virtual beacon (e.g. A1, B1, C1; A2,B2,C2 in Figure 5d) with a virtual displaced position Xa+d1x , Ya+d1y, etc). Thus, the size of the translation applied to the beacon will depend upon how far the device has moved between the time of the Bluetooth observation and the required time T of the position.

A time window can contain multiple Bluetooth observations with different observation times from the same beacon and/or different beacons. In general the device can be moving continuously so it is required to calculate a different translation for each individual observation.

In practice it is convenient to resolve the position displacements (dx,dy) derived from the accelerometer and gyroscope sensor data along two orthogonal axes (i.e. the X and Y components). Storing the cumulative values of the X and Y position displacements with timestamps, in time order makes it possible to efficiently calculate the translations between any two times. This is a function of the current values of heading offset and step length in the hidden parameters, and the step (and heading) observations.

For each RSSI observation, a range is calculated using the path loss model shown above and the relevant hidden state parameters, i.e. Path Loss Exponent and RX sensitivity. This results in a number of data points comprising range and adjusted beacon position at time T, as shown in Figure 5e. The translation of the beacon position for each signal strength measurement in the time window essentially compensates for the effect of the device's movement. Once these translations have been applied, standard trilateration or triangulation methods are used to estimate the device position with the key benefit of exploiting a larger number of range measurements at block 670. For instance, a MDS algorithm may be used.

**Table 1 shows Bluetooth observations in memory**

| Time | Beacon detected | Beacon position | RSSI to Beacon |
|---|---|---|---|
| t1 | A | Xa , Ya | rA1 |
| t1 | B | Xb , Yb | rB1 |
| t1 | C | Xc , Yc | rC1 |
| t2 | A | Xa , Ya | rA2 |
| t2 | B | Xb , Yb | rB2 |
| t2 | C | Xc , Yc | rC2 |

**Table 2 shows adjusted beacon positions at time T**

| Adjusted Beacon Position | RSSI to Beacon | Range (using attenuation formula and current hidden state values) |
|---|---|---|
| Xa+d1x , Ya+d1y | rA1 | Fn(rA1) |
| Xb+d1x , Yb+d1y | rB1 | Fn(rB1) |
| Xc+d1x , Yc+d1y | rC1 | Fn(rC1) |
| Xa+d2x , Ya+d2y | rA2 | Fn(rA2) |
| Xb+d2x , Yb+d2y | rB2 | Fn(rB2) |
| Xc+d2x , Yc+d2y | rC2 | Fn(rC2) |

where d1x is the x component of the displacement d1 between the device at time T1 and time T, and d1y is the y component, and where d2x is the x component of the displacement d2 between the device at time T2 and time T, and d2y is the y component. Fn in this example is in accordance with Equation 1 above.

Finally, at block 680, the estimated device position is mapped to a useful frame of reference in the building, and the position used, e.g. to be displayed or to trigger some further action based on location.

The method then repeats.

### Hidden State Estimation

The "observation alignment" technique may be used to estimate hidden state associated with the mechanisms of the sensors and of the dynamics of the system at block 640 of Figure 6. More accurate estimates of the hidden state enables more accurate device positions to be calculated.

An example of an iterative process 700 for finding estimates of hidden state parameters is illustrated by Figure 7. The same process is used for each parameter.

To begin with, windows of data 705, 715 are extracted from the Bluetooth and step in-memory data collections for a particular required time. The current values of the hidden state (or default values initially) 710 and the window of step data 705 are used at block 720 to calculate beacon displacements 720 for each of the Bluetooth observations in the window. This essentially stacks the Bluetooth observations 715 to compensate for motion of the device so that a new device position can be calculated using, for example, an MDS algorithm [7], although other algorithms may be used.

The distances between the displaced beacon positions and the new device position are calculated, which can be easily done by using basic trigonometry for example, i.e. the expected ranges. From these expected ranges and the path loss model and current values of the hidden state variables, expected RSSI signal strength values 730 are calculated for comparison with the observed values 740 which is used to calculate an error metric 750. In another example, the expected ranges are compared with the observed ranges by converting the observed RSSI values 715 to observed range values 740 using the path loss model (i.e. the comparison is made in the physical space rather than the signal space, as generally the error metric does not need to be in any particular units).

Generally the sensor readings suffer from noise meaning the calculated ranges will contain some error and the estimated position will be a best fit rather than a perfect fit for the data. In other words, some residual error or stress will remain in the calculated position. The error metric is an indication of this residual error, i.e. it can be the average difference between estimated and observed values, or a mean squared error function, etc. The aim is to continually adjust the parameters to minimise this residual error.

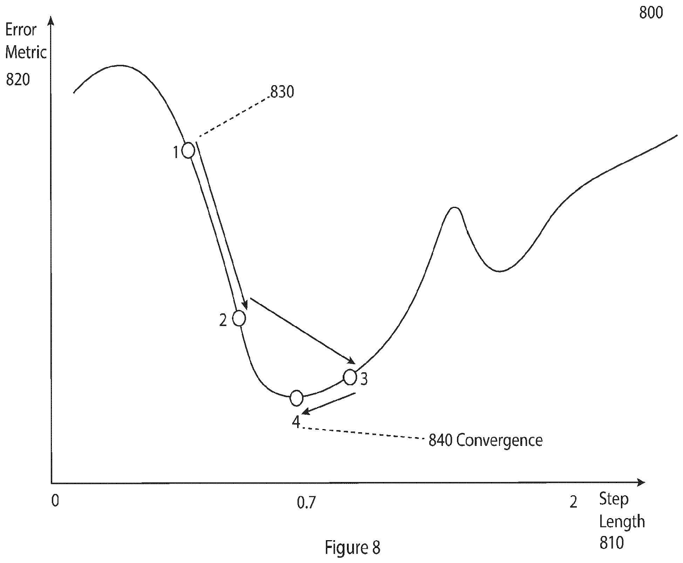

The parameter in question is iteratively varied (the path from block 750 to 710) by an optimiser until the error metric is minimised and a convergence criteria is met, at which point the process ends 760. Numerical optimisers such as the Broyden-Fletcher-Goldfarb-Shanno (BFGS) algorithm or gradient descent may be used for example. Figure 8 shows an example of using gradient descent to vary the step length parameter 810 until an optimum value is obtained. In the first iteration, the existing value for step length is first used at point 830 to calculate an error value 820 between expected and observed RSSI values. In the second iteration, a new value of step length is chosen using the gradient descent algorithm and the calculation of the error metric repeated. Eventually, after four iterations, the error metric is determined to converge 840 according to a predetermined criteria, and that value of step length is used for that time period.

Other parameter values can be similarly optimised. For instance, the heading offset parameter when varied will alter the displacements applied to the beacon positions at block 720, and thus will affect the estimated position of the device, which in turn leads to different expected RSSI value at block 730. Similarly, the RX sensitivity parameter will affect the expected RSSI value. By minimising the error metric between the expected and observed RSSI values at step 750, an optimum for the parameter value can be found.

Once the parameter value has been evaluated it is stored in memory as the new current value. It is then used as the current value input to future parameter updates and future position calculations.

Over time and as the device moves around, more parameter values are evaluated. In some examples, instead of calculating positions using the value from any one particular time window, it is preferable to use an average of a set of evaluations for each parameter.

After all of the parameters that require reevaluation for a particular time have been calculated a position for the device can be calculated using the latest averaged parameter values, as per block 645 in Figure 6.

Thus, the position can be thought of as another hidden state variable, where each variable is iteratively adjusted to reduce the error or stress between the expected range or observation using the adjusted parameter values and the actual observed values. Generally the position variable is the one of interest which is output for use in the wider application, but equally use may be made of any of the hidden state variables additionally or alternatively. For instance, in some applications, the absolute heading of the user may be the parameter of interest.

### Evaluation Time Points

The evaluation of heading offset, step length and path loss exponent does not need to happen altogether. It is actually more computationally efficient for each parameter to be evaluated at different intervals because the parameter values vary on different timescales. Similarly, this does not need to happen at the same time as the position estimates.

As blocks 620 and 630, Bluetooth and step observations are added to in-memory data structures as they are reported (615, 625). These data structures can be easily queried and windows of data can be extracted between a start and end time.

Positioning is most sensitive to the heading offset so this parameter is evaluated the most frequently (~ every 2 seconds if there are regular steps). Changes in the orientation of the device impact the heading offset so it is important that it is regularly reevaluated.

Whilst navigating, the path loss exponent varies relatively slowly. The path loss exponent can change dramatically however if, for example, the device is placed within a bag. Nevertheless, in general, positioning is less sensitive to the path loss exponent compared to changes in heading offset. A longer evaluation interval is therefore suitable for the path loss exponent. (~every 4 seconds, regardless of if there were steps).

The step length is an important input to calculate the beacon displacements so that the Bluetooth observations can be 'stacked', but less so compared with the heading offset. This parameter is therefore updated on an interval that is in between the interval for the heading offset and the path loss exponent (~every 3 seconds if there are regular steps). If the device is stationary for periods of time there is no need to evaluate the heading offset or the step length.

Generally, the position estimate may be calculated the most frequently, say every 1 second.

### Window Size and Positioning

The duration of the time window can be dynamically changed according to the prevailing conditions. Increasing the size of the time window increases the number of Bluetooth observations that can be stacked but it also potentially increases the displacements that are applied to the beacons, depending upon how far the device has moved within the window.

In the limit where the device remains stationary the time window can be made relatively large (30 seconds - 2 minutes) and all of the Bluetooth observations in this window can be employed to calculate a position. The other limit is when somebody is walking with the device at pace. For accurate results in this limit a smaller time is preferred (5 - 10 seconds). This is because small errors in the hidden state (specifically the heading offset) can lead to large errors in the beacon displacements. These errors are more severe for those observations in the window that have the largest time offset from the time of interest. Large time windows in this case can give 'over smoothed' and 'laggy' results. It is assumed that the values of the hidden state parameters do not change within the time window. As the duration of the time window increases this assumption is more likely to be problematic. Conversely, time windows that are too small (1 - 2 seconds) can give results that are too 'noisy' or 'jumpy'. There is a sweet spot for the duration of the time window that enables a sizable number of Bluetooth observations to be stacked to effectively determine the hidden state and produce accurate positions that are neither 'over smoothed' or 'jumpy'.

Different window sizes may be used for each parameter and/or position estimate. As discussed above, the window size may vary according to the current state of the device's movement and or on other factors. For instance, the window size may depend on the speed at which the device is moving.

The window is related in some way to the time point at which the position estimate is required. Often fixed offsets relative to the time point are used for the start and end of the window. For instance, in real time positioning, the window will often be the immediately preceding T seconds of data (where T is the length of the window), so the most up to date data is used. If the positioning is not happening in real time, e.g. historical data is being processed, then the window may be centered on the time point or have another offset. Usually the window will contain the time point, but not necessarily.

In some scenarios it may be useful to have a gap between the window and the time point. For instance, if an area of the environment has no sensor coverage such that observations of the anchors are not available for any reasons, and the device moves from a first zone with sensor coverage to a second zone without sensor coverage, the time window of data used for estimating position in the second zone can be the last window of data available from the first zone. When the device moves back to a zone where observations of the anchors are available, the window can be moved forward to include the new data.

Although the detailed examples of the technology have been described in relation to an indoor positioning system employing Bluetooth beacons to position a mobile device such as a smart phone, it will be appreciated from the foregoing that the techniques disclosed can be extended to any positioning system, indoor or outdoor, using a wide variety of sensor technologies to determine range/angle and displacements, including GNSS and outdoor positioning systems, robot positioning systems for an industrial environment, etc. Embodiments of the present invention have been described with particular reference to the examples illustrated.

### References

[1] Correa, A., Barcelo, M., Morell, A. and Vicario, J.L., 2017. A review of pedestrian indoor positioning systems for mass market applications. Sensors, 17(8), p.1927.
[2] Mendoza-Silva, G.M., Torres-Sospedra, J. and Huerta, J., 2019. A meta-review of indoor positioning systems. Sensors, 19(20), p.4507.
[3] Mendoza-Silva, G.M., Matey-Sanz, M., Torres-Sospedra, J. and Huerta, J., 2019. BLE RSS measurements dataset for research on accurate indoor positioning. Data, 4(1), p.12.
[4] Faragher, R. and Harle, R., 2015. Location fingerprinting with Bluetooth low energy beacons. IEEE journal on Selected Areas in Communications, 33(11), pp.2418-2428.
[5] Choi, J., Choi, Y.S. and Talwar, S., 2019. Unsupervised learning techniques for trilateration: From theory to android App implementation. IEEE Access, 7, pp.134525-134538.
[6] Choi, J. and Choi, Y.S., 2020. Calibration-free positioning technique using Wi-Fi ranging and built-in sensors of mobile devices. IEEE Internet of Things Journal, 8(1), pp.541-554.
[7] Costa, J.A., Patwari, N. and Hero III, A.O., 2006. Distributed weighted-multidimensional scaling for node localization in sensor networks. ACM Transactions on Sensor Networks (TOSN), 2(1), pp.39-64.

### Glossary of Terms and Trade Marks

RSSI - Received Signal Strength Indicator
RTT - Round Trip Time
IPS - Indoor Positioning System
GNSS - Global Navigation Satellite System
GPS - Global Positioning System
BT - Bluetooth (RTM)
RX - receiver
TX - transmitter
WiFi - a family of wireless network protocols, based on the IEEE 802.11 family of standards
RF - radio frequency signals
Dialog - Dialog Semiconductor (RTM)
PDR - Pedestrian Dead Reckoning
KF and EKF - Kalman Filter and Extended Kalman Filter
UWB - Ultra wideband (RTM)

## Claims

1. A computer implemented method (600) for estimating the position of a movable device in an environment, the method comprising:
receiving (620) a first set of observations taken at various times between the movable device (20) and plural distributed anchors (15), wherein the anchors have known positions in the environment and the observations (30) are taken by a first set of one or more of sensors (22);
defining a time window for a required time for which the position of the movable device is to be estimated;
for each observation taken at a time point within the time window (650):
estimating the range and/or angle from the movable device to the anchor from the observation;
estimating (660) the displacement of the movable device due to its motion between the time the observation was taken and the required time, wherein the displacement is estimated based at least in part on receiving observations (32) taken (625) by a second set of one or more sensors (24); and **characterized by**
adjusting (665) the position of the anchor involved in the observation by the displacement so as to compensate for the effect of the motion of the movable device; and
calculating (670,680) the position of the movable device at the required time based on the ranges and/or angles and the adjusted anchor positions.

2. The method of claim 1, wherein the method comprises one or more of:
i) the adjusted positions are calculated using geometric techniques;
ii) a multidimensional scaling algorithm is used to calculate position; and
iii) the position is calculated using trilateration or triangulation.

3. The method of any preceding claim, wherein the first set of sensors detect the strength, time of flight, phase, angle of arrival or departure of a wireless signal transmitted by the anchors and detected by the movable device and/or transmitted by the movable device and detected by the anchors and/or the second set of sensors include sensors on the movable device for detecting motion of the movable device within the environment.

4. The method of claim 3, wherein the wireless signal includes one or more of a Radio Frequency signal, a light signal, an ultrasound signal, a sonar signal, or a radar signal; and/or the second set of sensors includes inertial sensors onboard the movable device, or, where the movable device is a robot or vehicle, sensors for measuring the rotation of wheels or tracks or drivetrain of the robot or vehicle

5. A method according to any preceding claim, wherein at least one of:
i) the estimation of the range and/or angle
ii) the estimation of the displacement of the movable device and
iii) estimating the position of the movable device from observations is based on a model having at least one hidden state parameter (710).

6. The method of claim 5, comprising estimating (640) the at least one hidden state parameter using an optimisation technique (700) that minimises the difference (750) between the expected (730) and observed (740) values of the ranges to the anchors or between the expected and actual observation values.

7. The method of claim 6, the optimisation comprising:
i) finding a provisional estimated position of the movable device using the current hidden state parameters according to the method (600) of claim 1;
ii) comparing the provisional estimated position of the movable device with the adjusted beacon positions to obtain expected range values (730) or observation values (740);
iii) calculating the combined or average difference and determining whether a convergence criteria is met; and,
iv) if the criteria is not met, adjusting at least one hidden parameter and repeating steps i) to iii) until the criteria is met, and if the criteria is met, taking the adjusted parameter values as the new parameter values to be used in future parameter and/or position estimations.

8. A method according to any of claims 5 to 7, wherein the hidden state parameters used to estimate displacement of the movable device includes one or more of:
step length, starting position or starting heading, heading offset and offset drift, and/or wherein the hidden state parameters used to determine the range to the observed anchors includes one or more of:
TX power, path loss and RX sensitivity.

9. A method according to any preceding claim, wherein the time window used to estimate positions and/or hidden state is tuned or dynamically adjusted in duration or offset.

10. A method according to claims 5 to 9, wherein hidden state parameters are estimated independently from position calculations with a different duration time window.

11. A method according to any of claims 5 to 10, wherein different hidden state parameters are estimated independently from each other and independently from position calculations using their own tuned or dynamically adjusted time windows.

12. A method according to any of claims 5 to **11,** wherein an average is taken of calculated hidden state values and used in the position calculation.

13. A computer program (34) for carrying out the method of any of claims 1 to 12.

14. A movable device (20) comprising a processing device (26), memory, a first set of sensors (22) and a second set of sensors (24), arranged to carry out the method of any of claims 1 to 12.

15. A system (10) comprising a movable device (20), plural anchors (15), a processing device (26,50) arranged to carry out the method of any of claims 1 to 12.

## Patentansprüche

1. Computerimplementiertes Verfahren (600) zum Schätzen der Position einer beweglichen Vorrichtung in einer Umgebung, wobei das Verfahren umfasst:
Empfangen (620) einer ersten Menge von Beobachtungen, die in verschiedenen Zeitintervallen zwischen der beweglichen Vorrichtung (20) und mehreren verteilten Ankern (15) erfasst werden, wobei die Anker bekannte Positionen in der Umgebung aufweisen und die Beobachtungen (30) von einer ersten Menge aus einem oder mehreren Sensoren (22) erfasst werden;
Definieren eines Zeitfensters für eine erforderliche Zeit, für welche die Position der beweglichen Vorrichtung zu schätzen ist;
für jede Beobachtung, die zu einem Zeitpunkt innerhalb des Zeitfensters (650) erfasst wird:
Schätzen des Bereichs und/oder des Winkels von der beweglichen Vorrichtung zum Anker aus der Beobachtung;
Schätzen (660) der Verschiebung der beweglichen Vorrichtung aufgrund ihrer Bewegung zwischen der Zeit, zu der die Beobachtung erfasst wird, und der gewünschten Zeit, wobei die Verschiebung zumindest teilweise basierend auf empfangenen Beobachtungen (32) geschätzt wird, die von einer zweiten Menge aus einem oder mehreren Sensoren (24) erfasst (625) werden; und **gekennzeichnet durch**
Anpassen (665) der Position des an der Beobachtung beteiligten Ankers durch das Verschieben, um den Effekt der Bewegung der beweglichen Vorrichtung zu kompensieren; und
Berechnen (670, 680) der Position der beweglichen Vorrichtung zur gewünschten Zeit basierend auf den Bereichen und/oder Winkeln und den angepassten Ankerpositionen.

2. Verfahren nach Anspruch 1, wobei das Verfahren ein oder mehrere Elemente umfasst der Gruppe umfassend:
i) Berechnen der angepassten Positionen mit geometrischen Verfahren;
ii) Verwenden eines mehrdimensionalen Skalierungsalgorithmus zum Berechnen der Position; und
iii) Berechnen der Position mit Trilateration oder Triangulation.

3. Verfahren nach einem der vorhergehenden Ansprüche, wobei die erste Menge von Sensoren die Stärke, die Laufzeit, die Phase, den Ankunfts- oder Abgangswinkel eines drahtlosen Signals erfasst, das von den Ankern gesendet und von der beweglichen Vorrichtung erfasst wird und/oder von der beweglichen Vorrichtung gesendet und von den Ankern erfasst wird, und/oder die zweite Menge von Sensoren Sensoren an der beweglichen Vorrichtung umfasst, um eine Bewegung der beweglichen Vorrichtung innerhalb der Umgebung zu erfassen.

4. Verfahren nach Anspruch 3, wobei das drahtlose Signal ein oder mehrere Elemente umfasst der Gruppe umfassend ein Hochfrequenzsignal, ein Lichtsignal, ein Ultraschallsignal, ein Sonarsignal oder ein Radarsignal; und/oder die zweite Menge von Sensoren Trägheitssensoren an Bord der beweglichen Vorrichtung oder, falls die bewegliche Vorrichtung ein Roboter oder ein Fahrzeug ist, Sensoren zum Messen der Drehung von Rädern oder Ketten oder des Antriebsstrangs des Roboters oder Fahrzeugs umfasst.

5. Verfahren nach einem der vorhergehenden Ansprüche, wobei wenigstens ein Element der Gruppe umfassend
i) das Schätzen des Bereichs und/oder Winkels,
ii) das Schätzen der Verschiebung der beweglichen Vorrichtung, und
iii) das Schätzen der Position der beweglichen Vorrichtung aus Beobachtungen,
auf einem Modell basiert, das wenigstens einen verborgenen Zustandsparameter (710) aufweist.

6. Verfahren nach Anspruch 5, umfassend das Schätzen (640) des wenigstens einen verborgenen Zustandsparameters unter Verwendung eines Optimierungsverfahrens (700), das die Differenz (750) zwischen den erwarteten (730) und beobachteten (740) Werten der Bereiche zu den Ankern oder zwischen den erwarteten und tatsächlichen Beobachtungswerten minimiert.

7. Verfahren nach Anspruch 6, wobei die Optimierung umfasst:
i) Ermitteln einer vorläufigen geschätzten Position der beweglichen Vorrichtung unter Verwendung der aktuellen verborgenen Zustandsparameter gemäß dem Verfahren (600) nach Anspruch 1;
ii) Vergleich der vorläufigen geschätzten Position der mobilen Vorrichtung mit den angepassten Beacon-Positionen, um erwartete Bereichswerte (730) oder Beobachtungswerte (740) zu erhalten;
iii) Berechnen der kombinierten oder durchschnittlichen Differenz und Bestimmen, ob ein Konvergenzkriterium erfüllt ist; und,
iv) falls die Kriterien nicht erfüllt sind, Anpassen von wenigstens einem verborgenen Parameter und Wiederholen von Schritt i) bis iii), bis die Kriterien erfüllt sind, und wenn die Kriterien erfüllt sind, Verwenden der angepassten Parameterwerte als neue Parameterwerte, die bei künftigen Parameter- und/oder Positionsschätzungen verwendet werden.

8. Verfahren nach einem der Ansprüche 5 bis 7, wobei die zum Schätzen der Verschiebung der beweglichen Vorrichtung verwendeten verborgenen Zustandsparameter ein oder mehrere Elemente umfassen der Gruppe umfassend:
Schrittlänge, Startposition oder Startkurs, Kursversatz und Versatzdrift, und/oder wobei die verborgenen Zustandsparameter, die zum Bestimmen des Bereichs zu den beobachteten Ankern verwendet werden, ein oder mehrere Elemente umfassen der Gruppe umfassend:
Sendeleistung, Streckendämpfung und Empfangsempfindlichkeit.

9. Verfahren nach einem der vorhergehenden Ansprüche, wobei das zum Schätzen von Positionen und/oder des verborgenen Zustands verwendete Zeitfenster hinsichtlich seiner Dauer oder seines Offsets abgestimmt oder dynamisch angepasst wird.

10. Verfahren nach Anspruch 5 bis 9, wobei verborgene Zustandsparameter unabhängig von Positionsberechnungen mit einem anderen Zeitfenster geschätzt werden.

11. Verfahren nach einem der Ansprüche 5 bis 10, wobei verschiedene verborgene Zustandsparameter unabhängig voneinander und unabhängig von Positionsberechnungen unter Verwendung eigener abgestimmter oder dynamisch angepasster Zeitfenster geschätzt werden.

12. Verfahren nach einem der Ansprüche 5 bis 11, wobei ein Durchschnitt aus den berechneten verborgenen Zustandswerten gebildet und bei der Positionsberechnung verwendet wird.

13. Computerprogramm (34) zum Ausführen des Verfahrens nach einem der Ansprüche 1 bis 12.

14. Bewegliche Vorrichtung (20), umfassend eine Verarbeitungsvorrichtung (26), einen Speicher, eine erste Menge von Sensoren (22) und eine zweite Menge von Sensoren (24), angeordnet zum Ausführen des Verfahrens nach einem der Ansprüche 1 bis 12.

15. System (10), umfassend eine bewegliche Vorrichtung (20), mehrere Anker (15) und eine Verarbeitungsvorrichtung (26, 50), angeordnet zum Ausführen des Verfahrens nach einem der Ansprüche 1 bis 12.

## Revendications

1. Procédé mis en œuvre par ordinateur (600) pour estimer la position d'un dispositif mobile dans un environnement, le procédé comprenant :
la réception (620) d'un premier ensemble d'observations effectuées à différents instants entre le dispositif mobile (20) et plusieurs ancres (15) réparties, dans lequel les ancres ont des positions connues dans l'environnement et les observations (30) sont effectuées par un premier ensemble d'un ou plusieurs capteurs (22) ;
la définition d'une fenêtre temporelle pour un instant requis auquel la position du dispositif mobile doit être estimée ;
pour chaque observation effectuée à un instant dans la fenêtre temporelle (650) :
l'estimation de la distance et/ou de l'angle du dispositif mobile à l'ancre à partir de l'observation ;
l'estimation (650) du déplacement du dispositif mobile dû à son mouvement entre l'instant auquel l'observation a été effectuée et l'instant requis, dans lequel le déplacement est estimé sur la base au moins en partie de la réception d'observations (32) effectuées (625) par un second ensemble d'un ou plusieurs capteurs (24) ; et **caractérisé par**
l'ajustement (665) de la position de l'ancre impliquée dans l'observation par le déplacement de manière à compenser l'effet du mouvement du dispositif mobile ; et
le calcul (670, 680) de la position du dispositif mobile à l'instant requis sur la base des distances et/ou des angles et des positions ajustées des ancres.

2. Procédé selon la revendication 1, dans lequel le procédé comprend l'un ou plusieurs de ce qui suit :
i) les positions ajustées sont calculées au moyen de techniques géométriques ;
ii) un algorithme d'échelonnement multidimensionnel est utilisé pour calculer la position ; et
iii) la position est calculée au moyen de la trilatération ou de la triangulation.

3. Procédé selon l'une quelconque des revendications précédentes, dans lequel le premier ensemble de capteurs détecte l'intensité, le temps de vol, la phase, l'angle d'arrivée ou de départ d'un signal sans fil transmis par les ancres et détecté par le dispositif mobile et/ou transmis par le dispositif mobile et détecté par les ancres et/ou le second ensemble de capteurs inclut des capteurs sur le dispositif mobile pour détecter le mouvement du dispositif dans l'environnement.

4. Procédé selon la revendication 3, dans lequel le signal sans fil inclut l'un ou plusieurs d'un signal de fréquence radio, d'un signal lumineux, d'un signal ultrasonore, d'un signal sonar, ou d'un signal radar ; et/ou le second ensemble de capteurs inclut des capteurs inertiels intégrés au dispositif mobile, ou, lorsque le dispositif mobile est un robot ou un véhicule, des capteurs pour mesurer la rotation de roues ou de chenilles ou d'une transmission du robot ou véhicule.

5. Procédé selon l'une quelconque des revendications précédentes, dans lequel au moins l'une de ce qui suit :
i) l'estimation de la distance et/ou de l'angle
ii) l'estimation du déplacement du dispositif mobile et
iii) l'estimation de la position du dispositif mobile à partir d'observations est basée sur un modèle ayant au moins un paramètre d'état caché (710).

6. Procédé selon la revendication 5, comprenant l'estimation (640) de l'au moins un paramètre d'état caché au moyen d'une technique d'optimisation (700) qui minimise la différence (750) entre les valeurs attendues (730) et observées (740) des distances aux ancres ou entre les valeurs d'observation attendues et réelles.

7. Procédé selon la revendication 6, l'optimisation comprenant :
i) la détermination d'une position estimée provisoire du dispositif mobile au moyen des paramètres d'état cachés actuels selon le procédé (600) selon la revendication 1 ;
ii) la comparaison de la position estimée provisoire du dispositif mobile avec les positions ajustées de balises pour obtenir des valeurs de distance (730) ou des valeurs d'observation (740) attendues ;
iii) le calcul de la différence combinée ou moyenne et le fait de déterminer si un critère de convergence est satisfait ; et
iv) si le critère n'est pas satisfait, l'ajustement d'au moins un paramètre caché et la répétition des étapes i) à iii) jusqu'à ce que le critère soit satisfait, et si le critère est satisfait, l'adoption des valeurs de paramètres ajustées des comme nouvelles valeurs de paramètres à utiliser lors des estimations ultérieures de paramètres et/ou de position.

8. Procédé selon l'une quelconque des revendications 5 à 7, dans lequel les paramètres d'état cachés utilisés pour estimer le déplacement du dispositif mobile incluent l'un ou plusieurs de ce qui suit :
longueur de pas, position de départ ou cap de départ, décalage de cap et dérive de décalage, et/ou dans lequel les paramètres d'état cachés utilisés pour déterminer la distance aux ancres observées incluent l'un ou plusieurs de ce qui suit :
puissance de transmission, affaiblissement de propagation et sensibilité de réception.

9. Procédé selon l'une quelconque des revendications précédentes, dans lequel la fenêtre temporelle utilisée pour estimer des positions et/ou un état caché est réglée ou ajustée dynamiquement en durée ou en décalage.

10. Procédé selon l'une quelconque des revendications 5 à 9, dans lequel des paramètres d'état cachés sont estimés indépendamment de calculs de position avec une fenêtre temporelle de durée différente.

11. Procédé selon l'une quelconque des revendications 5 à 10, dans lequel des paramètres d'état cachés différents sont estimés indépendamment les uns des autres et indépendamment de calculs de position au moyen de leurs propres fenêtres temporelles réglées ou ajustées dynamiquement.

12. Procédé selon l'une quelconque des revendications 5 à 11, dans lequel une moyenne de valeurs d'états cachés calculés est effectuée et utilisée dans le calcul de position.

13. Programme informatique (34) destiné à mettre en œuvre le procédé selon l'une quelconque des revendications 1 à 12.

14. Dispositif mobile (20) comprenant un dispositif de traitement (26), une mémoire, un premier ensemble de capteurs (22) et un second ensemble de capteurs (24), agencés pour mettre en œuvre le procédé selon l'une quelconque des revendications 1 à 12.

15. Système (10) comprenant un dispositif mobile (20), plusieurs ancres (15), un dispositif de traitement (26, 50) agencé pour mettre en œuvre le procédé selon l'une quelconque des revendications 1 à 12.
